**Europäisches Patentamt**

**European Patent Office**

**Office européen des brevets**

(11) Veröffentlichungsnummer: **0 232 848**
**A2**

(12) # EUROPÄISCHE PATENTANMELDUNG

(21) Anmeldenummer: **87101500.4**

(51) Int. Cl.⁴: **B01D 29/14**

(22) Anmeldetag: **04.02.87**

(30) Priorität: **13.02.86 DE 3604469**

(43) Veröffentlichungstag der Anmeldung:
**19.08.87 Patentblatt 87/34**

(84) Benannte Vertragsstaaten:
**AT BE CH ES FR GB GR IT LI LU NL SE**

(71) Anmelder: **Ultrafilter GmbH Düsseldorf**
**Heinrich-Heine-Allee 3**
**D-4000 Düsseldorf 1(DE)**

(72) Erfinder: **Verhoefen, Ulrich**
**Wagnerstrasse 22**
**D-4154 Tönisvorst 2(DE)**
Erfinder: **Kronsbein, Dirk Gustav**
**Breidenhofer Strasse 45**
**D-5657 Haan 1(DE)**

(74) Vertreter: **König, Reimar, Dr.-Ing. et al**
**Patentanwälte Dr.-Ing. Reimar König**
**Dipl.-Ing. Klaus Bergen Wilhelm-Tell-Strasse**
**14 Postfach 260162**
**D-4000 Düsseldorf 1(DE)**

(54) **Filterelement.**

(57) Ein Filterelement besteht aus einer Endkappe - (1) mit einer Durchlaßöffnung (2), einer Bodenkappe (10) und einem dazwischen angeordneten, im wesentlichen rohrförmigen Mittelstück (7, 8, 9). Das Mittelstück (7, 8, 9) ist in Nuten (6, 13) der Endkappe (1) und der Bodenkappe (10) eingesteckt und mittels einer Vergußmasse (14) aus Glaslot festgelegt. Zusätzlich kann die gesamte Oberfläche des Filterelements mit Glas beschichtet sein, so daß sich eine erhöhte Korrosions-und Chemikalienbeständigkeit ergibt.

FIG. 1

EP 0 232 848 A2

## "Filterelement"

Die Erfindung betrifft ein Filterelement aus einem mittels mindestens einer mit einem Durchlaß versehenen Endkappe verbundenen Mittelstück und einem Verfahren zu seiner Herstellung.

Ein derartiges Filterelement ist in der DE-OS 27 06 017 beschrieben. Bei diesem Filterelement weisen die beiden Kappen jeweils einen im Querschnitt U-förmigen Rand und damit eine U-förmige Nut zur Aufnahme der Enden des Mittelstücks auf. Die Vergußmasse besteht aus Kunststoff, wie z.B. Epoxydharz oder Silikon. Zwar befriedigt diese bekannte Filterelement hinsichtlich seiner Filterwirkung und Standzeit außerordentlich, jedoch läßt der als Gußmasse verwendete Kunststoff keine höheren Betriebstemperaturen als etwa 250°C zu und ist die Chemikalien-und Korrosionsbeständigkeit der Filterteile nicht in jeder Hinsicht zufriedenstellend.

Der Erfindung liegt dementsprechend die Aufgabe zugrunde, bei einem Filterelement der eingangs erwähnten Art die Widerstandsfähigkeit gegen hohe Temperaturen sowie gegen Korrosion und gegen Chemikalienangriff zu verbessern.

Gelöst wird diese Aufgabe dadurch, daß die Vergußmasse erfindungsgemäß aus Glas bzw. Glaslot besteht. Glaslote bestehen aus einer Aufschlämmung von Pulvern vorzugsweise niedrigschmelzender Gläser und schmelzen bei Temperaturen bis 1000°C, vorzugsweise bei 400 bis 600°C, so daß das erfindungsgemäße Filterelement mit erheblich höheren Temperaturen beaufschlagt werden kann, als wenn die Vergußmasse aus Kunststoff bestünde. Selbstverständlich muß das Filtermaterial selber auch temperaturbeständig sein, was vorzugsweise durch die Verwendung eines Glasfaservlieses beispielsweise aus Quarzglasfasern als Filtermedium gewährleistet ist. Ein solches Filterelement erlaubt je nach der Art des Glaslots Betriebstemperaturen von 350 bis 550°C. Höhere Temperaturen scheitern an der Beständigkeit des Filtermaterials.

Vorzugsweise weisen die Kappen einen Rand mit U-förmigem Querschnitt als Aufnahme für die Enden des Mittelstücks auf. Das Mittelstück kann als doppelwandiges, durchlässiges Stützrohr mit darin angeordnetem Filtermaterial ausgebildet und ebenso wie die Endkappe und die Bodenkappe aus korrosions-und temperaturfestem Material hergestellt sein. Dieses Material besteht vorzugsweise aus Edelstahl, das zusätzlich noch zur Erhöhung der Korrosionsfestigkeit und der Beständigkeit gegen Chemikalien mit Glas beschichtet sein kann.

Um eine Rißbildung des an sich sehr spröden Glases zu verhindern, wird das Filterelement erfindungsgemäß nach einem Verfahren hergestellt, bei dem das Filterelement nach dem Zusammenbau und dem Versintern der Glasmasse spannungsarm geglüht und anschliessend langsam abgekühlt wird.

Wird das erfindungsgemäße Filterelement so behandelt, treten während des Betriebes keine Spannungen zwischen der Glasbeschichtung, der Glasvergußmasse und dem Material des Filterelements auf, da die Ausdehnungskoeffizienten des Glases vorzugsweise mit demjenigen des Materials, aus dem das Filterelement besteht, in der gleichen Größenordnung liegen. Somit läßt sich das Filterelement im Betrieb bis zu höchsten Temperaturen eben unterhalb des Erweichungspunktes des Glases benutzen.

Die Erfindung wird nachstehend anhand von in der Zeichnung schematisch im Schnitt dargestellten Ausführungsbeispielen des näheren erläutert; in der Zeichnung zeigen:

Fig. 1 einen axialen Querschnitt durch ein erfindungsgemäßes Filterelement mit Bodenkappe,

Fig. 2 ein beiderseits offenes Filterelement und

Fig. 3 einen vergrößerten Ausschnitt eines Filterelements im Querschnitt.

Das Filterelement besteht aus einer Endkappe 1 mit einem Durchlaß 2. Mittels O-Ringdichtungen 3 läßt sich das Filterelement mit einem nicht dargestellten Filtergehäuse abgedichtet verbinden. Die Endkappe 1 weist einen äußeren vorstehenden Rand 4 und einen inneren vorstehenden Rand 5 auf, zwischen denen sich eine Nut 6 befindet. In diese Nut 6 ist ein Mittelstück aus einem inneren Stützrohr 7 aus Streckmetall, einem äußeren Stützrohr 8 aus Streckmetall und einem dazwischen angeordneten Filtermaterial 9 aus Glasfaservlies eingesteckt. Das andere Ende des Mittelstücks 7, 8, 9 ist durch eine Bodenkappe 10 verschlossen, die ebenfalls einen vorstehenden äußeren Rand 11, einen vorstehenden inneren Rand 12 und eine dazwischen befindliche Nut 13 aufweist. In diese Nut 13 ist das andere Ende des Mittelstücks 7, 8, 9 eingesteckt; der Zwischenraum zwischen den Nuten 6, 13 und dem Mittelteil 7, 8, 9 ist mit einer Vergußmasse 14 aus Glas ausgehüllt.

Da die Glasvergußmasse 14 einen sehr hohen Schmelzpunkt besitzt und auch die übrigen Teile des Filterelements hinreichend temperaturbeständig sind, kann das Filterelement auch mit sehr heißen Gasen beaufschlagt werden, ohne daß hierdurch seine Wirksamkeit oder Standfestigkeit beeinflußt werden.

Die Endkappe 1, die Bodenkappe 10 und das Stützrohr 7, 8 bestehen vorzugsweise aus Edelstahl, um eine möglichst hohe Korrosions-und Chemikalienbeständigkeit zu gewährleisten. Zusätzlich können diese Teile auch mit Glas beschichtet sein, um eine noch bessere Korrosions-und Chemikalienbeständigkeit zu erreichen.

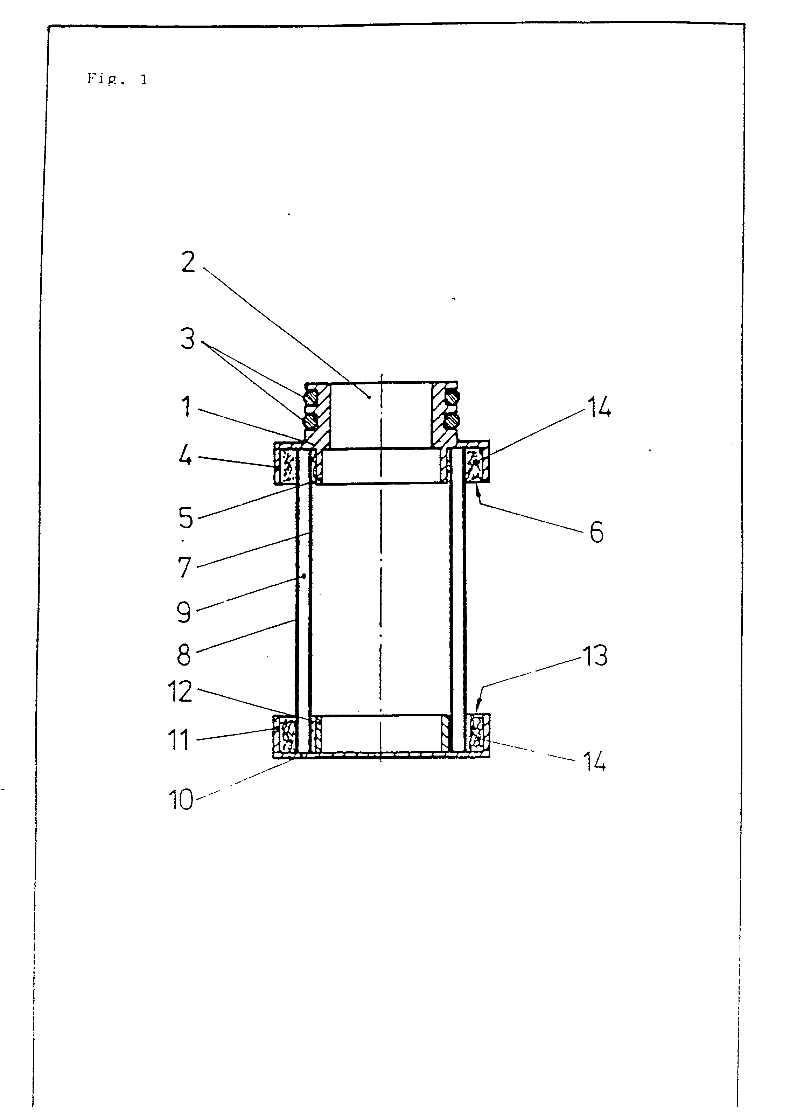

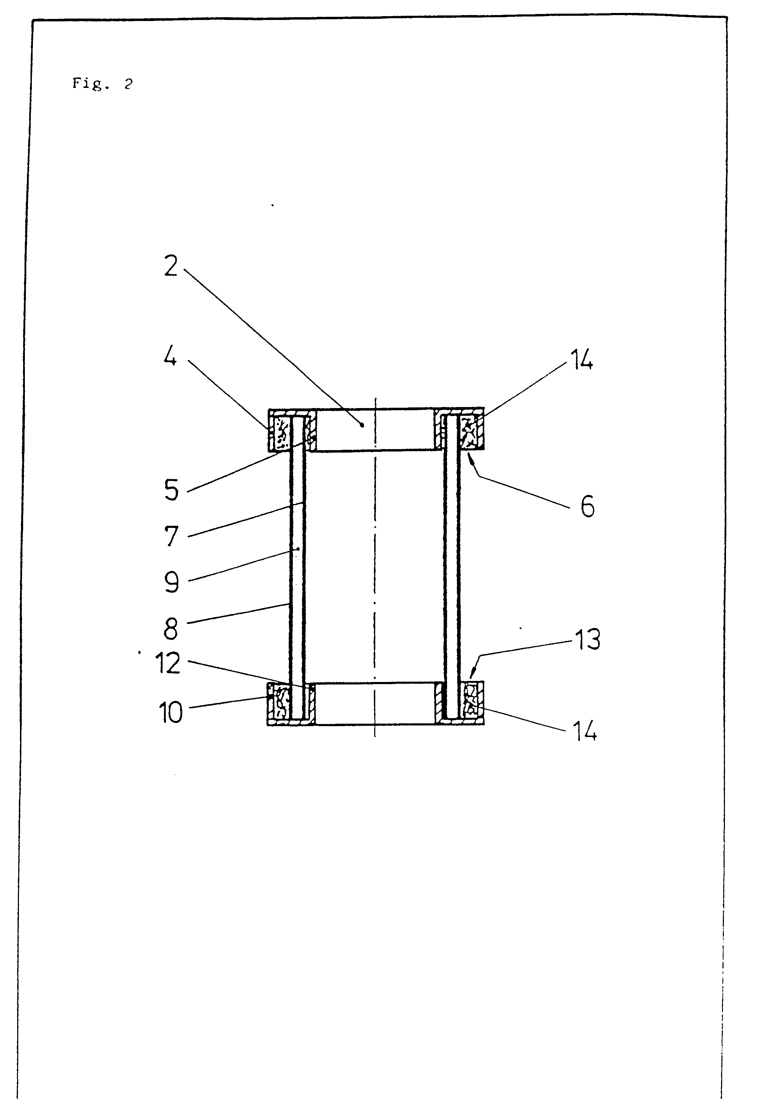

Das Ausführungsbeispiel der Fig. 2 unterscheidet sich von dem Filterelement der Fig. 1 nur dadurch, daß die Bodenkappe 10 und der Hals der Endkappe 1 mit den O-Ringen 3 fehlt. In diesem Fall bildet das nicht dargestellte Gehäuse die End- und die Bodenkappe.

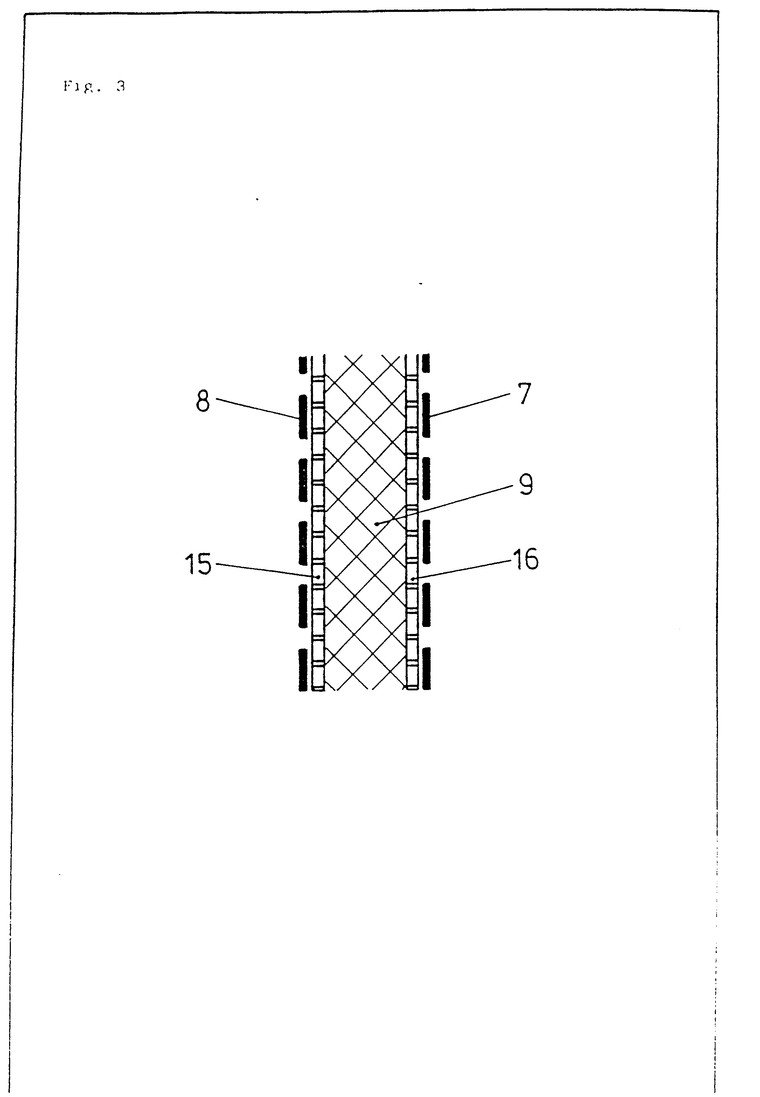

Bei dem Ausführungsbeispiel der Fig. 3 ist das Glasfaservlies 9 zwischen je einem Gewebe 15, 16 aus Filtermaterial angeordnet.

**Ansprüche**

1. Filterelement aus einem mittels Vergußmasse mit mindestens einer mit einem Durchlaß versehenen Endkappe verbundenen Mittelstück dadurch gekennzeichnet, daß die Vergußmasse aus Glas besteht.

2. Filterelement nach Anspruch 1, gekennzeichnet durch daß eine Bodenkappe und eine Endkappe jeweils mit einem U-förmigen Rand.

3. Filterelement nach Anspruch 1 oder 2, dadurch gekennzeichnet, daß das Filtermaterial (9) aus Glasfasern besteht.

4. Filterelement nach einem oder mehreren der Ansprüche 1 bis 3, dadurch gekennzeichnet, daß das Mittelstück (7, 8, 9) als doppelwandiges Stützrohr (7, 8) mit darin angeordnetem Filtermaterial (9) ausgebildet ist und ebenso wie die Endkappe (1) und die Bodenkappe (10) aus korrosions- und temperaturfestem Material bestehen.

5. Filterelement nach einem oder mehreren der Ansprüche 1 bis 4, dadurch gekennzeichnet, daß die Endkappe (1), die Stützrohre (7, 8) und die Bodenkappe (10) aus Edelstahl bestehen.

6. Filterelement nach einem der Ansprüche 1 bis 5, dadurch gekennzeichnet, daß die Endkappe - (1), die Stützrohre (7, 8) und die Bodenkappe (10) mit Glas beschichtet sind.

7. Filterelement nach einem oder mehreren der Ansprüche 4 bis 6, dadurch gekennzeichnet, daß zwischen dem Filtermaterial (9) und mindestens einem der Stützrohre (7, 8) ein Gewebe (15, 16) aus Filtermaterial angeordnet ist.

8. Verfahren zum Herstellen eines Filterelementes nach den Ansprüchen 1 bis 7, dadurch gekennzeichnet, daß das Filterelement nach dem Zusammenbau und dem Versintern der Glasmasse spannungsarm geglüht und anschließend langsam abgekühlt wird.

Fig. 1

Fig. 2

Fig. 3